# EUROPEAN PATENT APPLICATION

(11) **EP 2 608 119 A1**
(43) Date of publication of application: **26.06.2013**
(21) Application number: 11194466.6
(22) Date of filing: 20.12.2011
(51) Int. Cl.: G06N 5/00, G06F 11/36

(54) **Method and device for automatically proving the correctness of a software or firmware program model**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Mentre, David, 35708 Rennes Cedex 7 (FR)
(74) Representative: Maillet, Alain

(57) **Abstract**

For automatically proving the correctness of a software program model, said software program model involving a set of proof obligations to be proved by a first automatic prover and at least one second automatic prover, each proof obligation being described in a format compliant with the first automatic prover, a device: obtains, for each proof obligation to be proved, an abstract syntax tree representing said obligation to be proved, each abstract syntax tree comprising interconnected nodes and leaves representing each operator and operand of said obligation to be proved; associates a type with each node and leaf in the obtained abstract syntax trees, a type for an operator being at least defined on the basis of the type of the result of the operation performed by the operator; and converts the abstract syntax trees with associated types into at least one proof obligations description matching a format compliant with the at least one second automatic prover, each node or leaf of the abstract syntax trees being converted in a corresponding symbol in said format compliant with the at least one second automatic prover taking into account the type associated with said node or leaf.

## Description

The present invention generally relates to automatically proving the correctness of a software or firmware program model.

Formal methods are techniques for demonstrating, using mathematical logic, the correctness of software programs compared to a given specification. Formal methods allow providing a confidence level in the bug-free character of software programs. Such formal methods are also applicable to firmware design, such as in VHDL *(VHSIC - Very-High-Speed Integrated Circuits - Hardware Description Language)* programming.

The "B Method" is a formal method of software development to create a software program. The said software program is made by defining a model that describes the expected behaviour as well as the actual implementation of the software program. The document *"*The B-Book, Assigning Programs to Meanings", by Jean-Raymond Abrial, 1996, details the "B Method" approach. The behaviour of the software program can be proved using an automatic prover, and a manual prover aiming at obtaining proofs that couldn't be obtained automatically with the automatic prover. The manual prover requires interaction with a user to find the proof. Such interactions are time-consuming and significantly reduce the overall performance of the verification system.

Proof obligations can also be automatically proved by using SMT (*Satisfiability Modulo Theory*) provers. However, adding other automatic provers requires translating the model defined according to the "B Method" into a format that can be input to such SMT provers. For instance, the Jessie plug-in module of Frama-C (*Framework for Modular Analysis of C programs*) or the GNATprove formal verification tool of the Ada toolset developed within the scope of the Hi-Lite project, might be used. Translating the model increases the risk of error in the verification chain, and increases the time required to perform the verification.

It is desirable to overcome the aforementioned problems and drawbacks of the state of the art.

In particular, it is desirable to provide a solution that allows increasing the proportion of proof obligations that are automatically proved, while avoiding interactions with a user.

It is furthermore desirable to provide a solution that allows securely taking benefit of plural automatic provers using different proof obligations description formats, whatever is the level of complexity of software programs to be verified.

It is furthermore desirable to provide a solution that allows reducing the processing time necessary to prove the correctness of software programs above a given confidence level.

To that end, the present invention concerns a method performed by a device for automatically proving the correctness of a software or firmware program model, said software or firmware program model involving a set of proof obligations to be proved by a first automatic prover and at least one second automatic prover, each proof obligation being described in a format compliant with the first automatic prover. The method is further such that it comprises: obtaining, for each proof obligation to be proved, an abstract syntax tree representing said obligation to be proved, each abstract syntax tree comprising interconnected nodes and leaves representing each operator and operand of said obligation to be proved; associating a type with each node and leaf in the obtained abstract syntax trees, a type for an operator being at least defined on the basis of the type of the result of the operation performed by the operator; and, converting the abstract syntax trees with associated types into at least one proof obligations description matching a format compliant with the at least one second automatic prover, each node or leaf of the abstract syntax trees being converted in a corresponding symbol in said format compliant with the at least one second automatic prover taking into account the type associated with said node or leaf.

Thus, by implementing abstract syntax trees, and by associating types to each node and leaf of the abstract syntax trees, the proof obligations can be converted without ambiguity into the format compliant with the at least one second automatic prover. The proportion of proof obligations that are automatically proved is therefore increased, while avoiding interactions with a user. Furthermore, the conversion at symbol level allows securely taking benefit of plural automatic provers using different proof obligations description formats, whatever is the level of complexity of software programs to be verified.

According to a particular feature, each proof obligation being defined by a logic relationship between formulas, it comprises obtaining, for each formula used in defining the proof obligations to be proved, an abstract syntax tree representing said formula, each abstract syntax tree comprising interconnected nodes and leaves representing each operator and operand of said formula.

Thus, as redundant parts are factorised by the obtaining of abstract syntax trees for the formulas, converting is simplified.

According to a particular feature, the type for an operator is a conjunction of the types of the operands and the type of the result of the operation performed by the operator.

Thus, consistency of the abstract syntax trees with associated types can be checked. Moreover, converting is simplified.

According to a particular feature, each abstract syntax tree is obtained by parsing and lexically analysing a description of the proof obligations in the format compliant with the first automatic prover.

Thus, model analysing tool, such as Atelier B for the "B Method", can be used as a provider of the proof obligations description and of the first automatic prover.

According to a particular feature, converting the abstract syntax trees comprises: searching for abstract syntax tree fragments matching a predefined transcription rule; converting the operator of a found abstract syntax tree fragment matching the predefined transcription rule; and searching for another abstract syntax tree fragment matching a predefined transcription rule in a sub-tree of the found abstract syntax tree fragment.

Thus, thanks to the types associated with nodes and leaves in the abstract syntax trees, converting is simplified and reliably applied.

According to a particular feature, the abstract syntax trees are converted into plural proof obligation descriptions, in that the proof obligations are spread among the proof obligations descriptions according to a predefined maximum number of proof obligations per proof obligations description.

Thus, a maximum capability of the automatic provers can be exploited. Moreover, the processing time necessary to prove the correctness of software programs is reduced, as automatic provers work on proof obligations contexts that are less complex.

According to a particular feature, the method comprises: attempting to obtain proofs for each proof obligation with the first automatic prover and the at least one second automatic prover; and, determining for each proof obligation a confidence level, on the basis of a number of automatic provers with which the proof obligation has been proved.

Thus, the results of the verification by plural automatic provers can be easily checked.

According to a particular feature, the confidence level is further determined on the basis of at least one identifier of an automatic prover with which the proof obligation has been proved.

Thus, the results of the verification by plural automatic provers can be refined, for instance by taking into account the fact that some automatic provers may be certified whereas other automatic provers are not, thus being more reliable than said other automatic provers.

According to a particular feature, the method comprises: attempting to obtain proofs for each proof obligation with the first automatic prover and the at least one second automatic prover within a first processing limit; and attempting to obtain proofs with at least one automatic prover among the first automatic prover and the at least one second automatic prover within a second processing limit greater than the first processing limit, for each proof obligation that has not been proved within the first processing limit.

Thus, partial results of the verification can be obtained rapidly. Moreover, the processing time necessary to prove the correctness of software programs is reduced, as automatic provers work on proof obligations contexts that are less complex.

According to a particular feature, the method further comprises attempting to obtain proofs with at least one automatic prover among the first automatic prover and the at least one second automatic prover within the second processing limit, for each proof obligation that has not been proved within the first processing limit by a predefined number of automatic provers.

Thus, the confidence in the results of the verification may be increased.

According to a particular feature, said first and second processing limits are processing timeouts.

The present invention also concerns a device for automatically proving the correctness of a software or firmware program model, said software or firmware program model involving a set of proof obligations to be proved by a first automatic prover and at least one second automatic prover, each proof obligation being described in a format compliant with the first automatic prover. The device is such that it comprises: means for obtaining, for each proof obligation to be proved, an abstract syntax tree representing said obligation to be proved, each abstract syntax tree comprising interconnected nodes and leaves representing each operator and operand of said obligation to be proved; means for associating a type with each node and leaf in the obtained abstract syntax trees, a type for an operator being at least defined on the basis of the type of the result of the operation performed by the operator; and means for converting the abstract syntax trees with associated types into at least one proof obligations description matching a format compliant with the at least one second automatic prover, each node or leaf of the abstract syntax trees being converted in a corresponding symbol in said format compliant with the at least one second automatic prover taking into account the type associated with said node or leaf.

The present invention also concerns a computer program that can be downloaded from a communication network and/or stored on a medium that can be read by a computer and run by a processor. This computer program comprises instructions for implementing the aforementioned method in any one of its various embodiments, when said program is run by the processor.

The present invention also concerns an information storage means, storing a computer program comprising a set of instructions that can be run by a processor for implementing the aforementioned method in any one of its various embodiments, when the stored information is read by a computer and run by a processor.

Since the features and advantages related to the device and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:
Fig. 1 schematically represents a first architecture of a verification chain implementing the present invention;
Fig. 2 schematically represents a second architecture of a verification chain implementing the present invention;
Fig. 3 schematically represents a hardware platform that may implement the verification chain;
Fig. 4 schematically represents an algorithm for performing a transcription from a first proof obligations description to at least one second proof obligations description;
Fig. 5 schematically represents an algorithm for generating plural second proof obligations description from the first proof obligation description;
Fig. 6 schematically represents an algorithm for combining results obtained by plural automatic provers;
Fig. 7 schematically represents an algorithm for configuring plural automatic provers;
Fig. 8 schematically represents an abstract syntax tree obtained for a first formula;
Fig. 9 schematically represents an abstract syntax tree obtained for a second formula;
Fig. 10 schematically represents a plurality of proof obligations descriptions generated from a single proof obligations description.

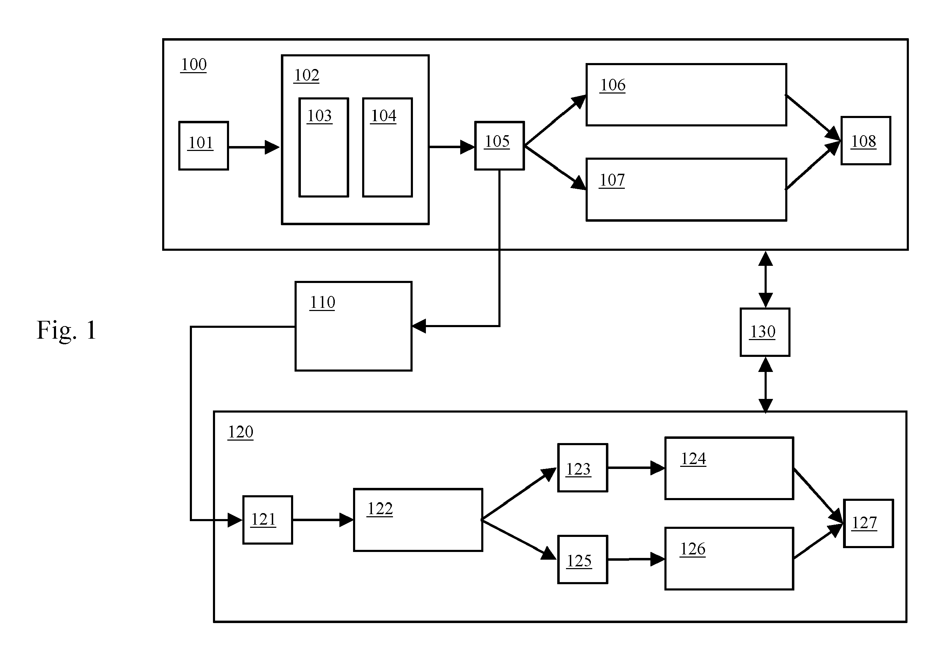

**Fig. 1** schematically represents a first architecture of a verification chain implementing the present invention. The verification chain shown in Fig. 1 comprises a first verification sub-chain 100 and a second verification sub-chain 120.

The first verification sub-chain 100 comprises a model input 101 adapted to receive a model of the software program to be verified. The model input 101 may be a register or a memory zone adapted to receive, or store, the model. The model input 101 may be a file, or a pointer to such file, comprising the model.

The model is preferably built according to the "B Method". Other model definition methods may be used, such as Z, VDM *(Vienna Development Method),* SPIN developed at Bell Labs, or ACL2 *(A Computational Logic for Applicative Common Lisp),* to name a few. The model according to the "B Method" is a set of machines, in which some assertions need to be proved, as detailed in chapters 4 and 7 of the document *"*The B-Book, Assigning Programs to Meanings ", by Jean-Raymond Abrial, 1996.

Here is an example of a model described according to the B Method, wherein it can be noted that the symbol "⊆" represents the set inclusion operation, the symbol "U" represents the set union operation and the symbol "/\" represents the logical "and" operation. This model defines an integer variable "var" as well as three enumerated sets setA, setB and setC with respective content {ax, ay}, {bx, by} and {ax, ay, bx, by}. The model then checks that an arithmetic formula on variable "var" (*"3*var-2*var = var ")* as well as some set relationships *("SetA - {ax}* = *{ay} " and "SetA U SetB = SetC")* are fulfilled:

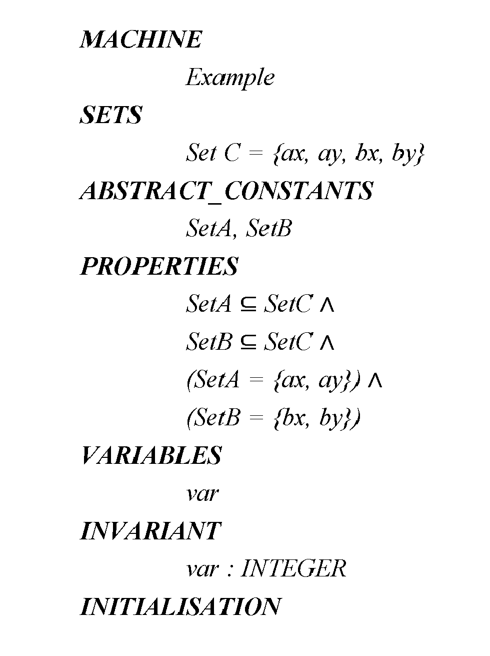

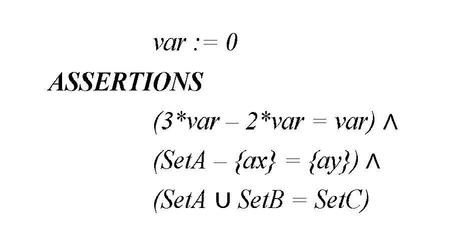

The first verification sub-chain 100 further comprises a model analysis unit 102 adapted to analyse the model obtained via the model input 101. The model analysis unit 102 generates proof obligations that are stored in a proof obligations description output 105. The proof obligations description output 105 may be a register or a memory zone adapted to receive, or store, the proof obligations. The proof obligations description output 105 may be a file, or a pointer to such file, comprising the proof obligations. Each proof obligation is defined by a logic relationship between at least two formulas, which needs to be proved correct. Such a logic relationship is typically a logic implication relationship, or an equivalent logic relationship. The proof obligations description may further comprise definitions of formulas and enumerated sets, allowing factorising the expressions recurrently present in the proof obligations definition and simplifying the description of the proof obligations themselves. Each enumerated set is defined as a group of elements that can be used in a formula. The generation of the proof obligations, of the formulas and of the enumerated sets, as well as the use of operators, are performed according to the "B Method", as detailed in appendices E and F of the document *"*The B-Book, Assigning Programs to Meanings", by Jean-Raymond Abrial, 1996.

In the proof obligations description output 105, each proof obligation is described in a format compliant with the first automatic prover.

The model example shown above leads to the following, wherein *ProofList* represents a resulting list of proof obligations, *Formulas* represents a resulting list of formulas, *EnumerateX* represents a list of enumerated sets and the symbol "⇒" represents the logic implication relationship. It can be noticed that each formula is numbered and represented by the expression *f(n),* wherein *n* is the index of the formula.

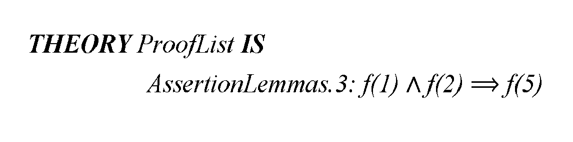

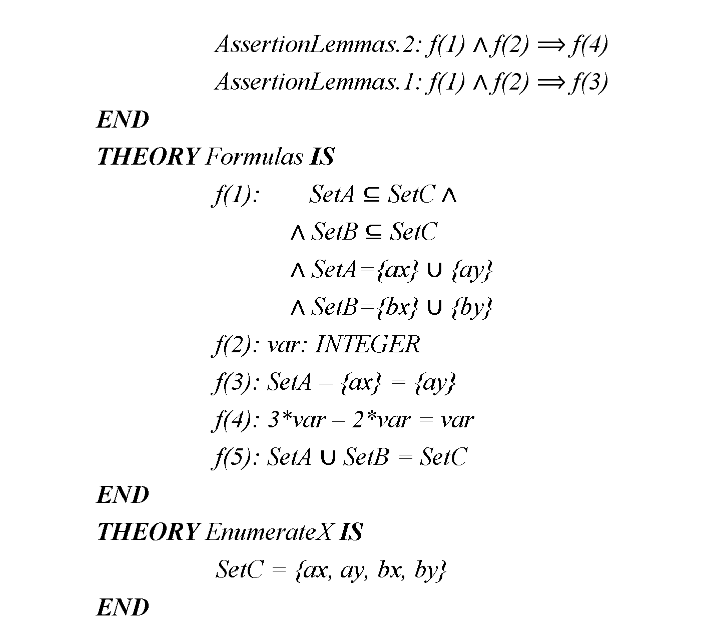

The model analysis unit 102 comprises a first sub-unit 103 adapted to parse the model obtained via the model input 101. The model analysis unit 102 comprises a second sub-unit 104 adapted to create at least one model abstract syntax tree from the model input 101 obtained via the sub-unit 103 and to create the proof obligations from the at least one model abstract syntax tree.

The first verification sub-chain 100 further comprises an automatic prover 106 and a manual prover 107. The automatic prover 106 automatically generates proofs that are stored in a proofs output 108. The automatic prover 106 is adapted to verify the correctness of the model with regard to proof obligations. The proofs output 108 may be a register or a memory zone adapted to receive, or store, the proofs. The proofs output 108 may be a file, or a pointer to such file, comprising the proofs. The manual prover 107 also generates proofs that are stored in the proofs output 108. The manual prover 107 is adapted to interact with a user in order to allow manually verifying the correctness of the model with regard to proof obligations.

It is generally considered that, for a correct model described according to the "B Method" and according to its complexity, 60% to 95% of the proof obligations can be proved using an automatic prover. The remaining 5% to 40% of the proof obligations need to be verified manually.

The second verification sub-chain 120 comprises a proof obligations description input 121 adapted to receive a description of the software program to be verified. The proof obligations description input 121 may be a register or a memory zone adapted to receive, or store, the proof obligations description. The proof obligations description input 121 may be a file, or a pointer to such file, comprising the description of the software program to be verified.

The second verification sub-chain 120 further comprises a description analysis unit 122 adapted to analyse the description obtained via the proof obligations description input 121. The description analysis unit 122 may, among other definitions, comprise definitions of axioms, of predicate symbols and/or of logic function symbols. The description analysis unit 122 generates a set of descriptions, the descriptions having respective formats compliant with the respective automatic provers 124, 126. The descriptions are stored in respective description outputs 123, 125. The description outputs 123, 125 may be registers or memory zones adapted to receive, or store, the descriptions generated by the description analysis unit 122. The description outputs 123, 125 may be files, or pointers to such files, comprising the descriptions. The automatic provers 124, 126 are for instance SMT provers, such as a CVC3 prover and a Z3 prover. The automatic provers 124, 126 automatically generate proofs that are stored in a proofs output 127. The proofs output 127 may be a register or a memory zone adapted to receive, or store, the proofs. The proofs output 127 may be a file, or a pointer to such file, comprising the proofs.

In another embodiment, the proof obligations description input 121 is directly connected to at least one automatic prover. The content of the proof obligations input 121 is therefore in a format compliant with said at least one second automatic prover, such as the automatic provers 124, 126.

In an illustrative embodiment, the first verification sub-chain 100 corresponds to the Atelier B tool developed by the ClearSy company and the second verification sub-chain 120 corresponds to the Why3 platform developed by the French institute INRIA.

The verification chain further comprises a transcription unit 110. The transcription unit 110 is configured to obtain the proof obligations, as well as the necessary formulas and enumerated sets used therein, from the proof obligations description output 105.

The transcription unit 110 is further configured to determine abstract syntax trees from the proof obligations and formulas. The obtained abstract syntax trees determined by the transcription unit 110 are preferably similar to the abstract syntax trees generated by the first sub-unit 103. Each abstract syntax tree comprises interconnected nodes and leaves representing each operator and operand of the concerned proof obligation or formula.

In order to determine the abstract syntax trees, the transcription unit 110 is configured to read each formula using a lexer and parser unit. The lexer and parser unit is configured to recognize the syntax according the "B Method", using a predefined priority of operators as used by the model analysis unit 102 and more particularly by the second sub-unit 104 for generating the proof obligations. An illustrative example of operators priority is detailed in Annex A of the document *"*B Language Reference Manual", Version 1.8.7, by the company ClearSy. For each formula, the transcription unit 110 is configured to create an abstract syntax tree, wherein the operators are presented with a corresponding symbol. In other words, each abstract syntax tree is obtained by parsing and lexically analysing the description of the proof obligations in the format compliant with the automatic prover 106.

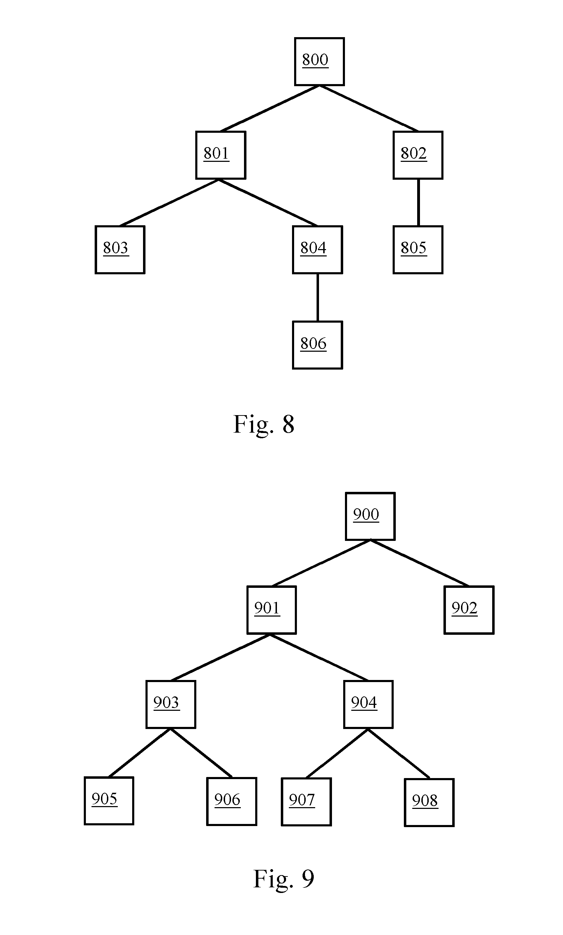

The abstract syntax tree that is obtained by the transcription unit 110 for the formula *f(3)* in the example already presented hereinbefore is shown in **Fig. 8****.** A root node 800 represents the operator symbol "=". The root node 800 is connected to two child nodes 801 and 802. The node 801 represents the operator symbol "-" and the node 802 represents the operand symbol "{}". The node 802 is connected to a leaf node 805 representing *"ay".* The node 801 is connected to two child nodes 803 and 804. The node 803 is a leaf node representing *"SetA".* The node 804 represents the operand symbol "{}" and is connected to a leaf node 806 representing *"ax".* The formula *f(3)* is then described in the form of an abstract syntax tree.

The abstract syntax tree that is obtained by the transcription unit 110 for the formula *f(4)* in the example already presented hereinbefore is shown in **Fig. 9**. A root node 900 represents the operator symbol "=". The root node 900 is connected to two child nodes 901 and 902. The node 901 represents the operator symbol "-" and the node 902 represents *"var".* The node 901 is connected to two child nodes 903 and 904. The node 903 represents the operator symbol "*" and the node 904 also represents the operator symbol "*". The node 903 is connected to two child nodes 905 and 906. The node 905 is a leaf node representing a value equal to 3. The node 906 is a leaf node representing *"var".* The node 904 is connected to two child nodes 907 and 908. The node 907 is a leaf node representing a value equal to 2. The node 908 is a leaf node representing *"var".* The formula *f(4)* is then described in the form of an abstract syntax tree.

The transcription unit 110 is further configured to create an abstract syntax tree for each proof obligation, in a similar way as described above for the formulas. In a variant, the transcription unit 110 creates an abstract syntax tree for each proof obligation, each abstract syntax tree being self-sufficient, meaning that it doesn't rely on separate abstract syntax trees for formulas, the formulas being directly present in the abstract syntax trees of the proof obligations. Creating separate abstract syntax trees for proof obligations and formulas eases the transcription.

The transcription unit 110 is further configured to read the enumerated sets from the proof obligations description output 105 and to store each element of the read enumerated sets.

The transcription unit 110 is further configured to traverse the created abstract syntax trees to gather all identifiers used therein. In the example described hereinbefore, the gathered identifiers are *"SetA", "SetB", "SetC"* and *"var".*

The transcription unit 110 is further configured to insert types in the abstract syntax trees. Each node or leaf is then associated with a type. For an operator, the type is at least defined on the basis of the type of the result of the operation performed by the operator. In a particular embodiment, the type of the operator consists in a conjunction of the types for the operands and the type of the result of the operation performed by the operator. Including types of the operands in the definition of the type of the operator allows verifying the consistency of the types throughout the abstract syntax tree. For an identifier or a constant value, the corresponding type in the abstract syntax trees is the type of the identifier or constant value.

With each operator is associated a type. For example the operator "*" may be given the constraint to use two integers as parameters and to return an integer. For some operators, it is possible that multiple types match a single operator. For example the operators "*" and "-" can use integers or sets as formal parameters and return values.

Moreover, with each identifier is associated a unique type. The type of each identifier should therefore be consistent in all the abstract syntax trees.

The insertion of types in the abstract syntax trees may be performed following an Hindley-Milner type inference algorithm. It allows deducing the most general type for each identifier in the abstract syntax trees.

The abstract syntax tree with associated types that is obtained by the transcription unit 110 for the formula f(3) in the example already presented hereinbefore is as follows. The root node 800 accepts two parameters of type *set* and returns an expression of type *boolean.* The node 801 accepts two parameters of type *set* and returns an expression of type *set.* The node 802 and the nodes 803 and 804 are of type *set.* The leaf nodes 805 and 806 are of type *set element.*

The abstract syntax tree with associated types that is obtained by the transcription unit 110 for the formula *f(4)* in the example already presented hereinbefore is as follows. The root node 900 accepts two parameters of type *integer* and returns an expression of type *boolean.* The node 901 accepts two parameters of type *integer* and returns an expression of type *integer.* The leaf node 902 is of type *integer.* The nodes 903 and 904 accept two parameters of type *integer* and return an expression of type *integer.* The leaf nodes 905, 906, 907 and 908 are of type *integer.*

One should note from the examples above that, despite the nodes 800 and 900 correspond to a same operator representation "=", they effectively correspond to distinct operations, as their associated type are different. Similarly, despite the nodes 801 and 901 correspond to a same operator representation "-", they effectively correspond to distinct operations, as their associated type are different.

The transcription unit 110 is further configured to convert the abstract syntax trees with associated types into a description format suitable for the proof obligations description input 121. Each node or leaf of the abstract syntax trees are then converted in a corresponding symbol, taking into account the type associated with said node or leaf. The description analysis unit 122 is in charge of finalizing the conversion toward formats compliant with the automatic provers 124, 126. For instance, the description analysis 122 may convert polymorphic operators in monomorphic operators.

The transcription unit 110 is configured to firstly convert all enumerated sets in a syntax adapted to the proof obligations description input 121.

If the proof obligations description input 121 doesn't support sum types, dedicated axioms need to be used in the automatic provers 124, 126. The sum types are however convenient to reproduce the constraints of enumerated sets defined according to the "B Method", as all values of an enumerated set are explicitly specified and all the values are disjoint in pairs.

The transcription unit 110 is configured to secondly convert each abstract syntax tree representative of a formula into a syntax adapted to the proof obligations description input 121. This conversion is performed using a set of transcription rules, each transcription rule being applied in a predefined order. For example, the ordering of the transcription rules insures that specific cases are considered before applying a more general transcription rule that covers those specific cases.

A transcription rule may match a fragment of the considered abstract syntax tree. In this case, a transcription of this fragment of the abstract syntax tree is performed. The transcription is then performed recursively on the sub-tree(s) contained in this abstract syntax tree fragment. Each time a transcription rule is applied, the operator used in the abstract syntax tree fragment is translated into a fragment of the proof obligation description input 121, using its syntax. In other words, a set of transcription rules being predefined, the transcription unit 110 is configured to search for abstract syntax tree fragments matching a predefined transcription rule, convert the operator of a found abstract syntax tree fragment matching the predefined transcription rule, and to search for another abstract syntax tree fragment matching a predefined transcription rule in a sub-tree of the found abstract syntax tree fragment.

It can be noted that the names of the formulas may also be adapted to match the syntax adapted to the proof obligations description input 121.

Let's for instance consider such transcription rules for the operator "=". As already mentioned, the operator "=" may refer to the set equality operator, which may be represented by the symbol "==" in the syntax adapted to the proof obligations description input 121; the operator "=" may also refer to the arithmetic equality operator, which may be represented by the symbol "=" in the syntax adapted to the proof obligations description input 121. Therefore, the transcription rule instructs the transcription unit 110 to check the type of the parameters of the operator "=" in the concerned abstract syntax tree fragment, and to decide accordingly which resulting operator, "==" or "=", is concerned.

Some transcription rules may instruct the transcription unit 110 not to convert a part of the abstract syntax tree. In that case, the original fragment of the syntax tree is put in comments into the proof obligations description input 121, with a marker stating that that part of the abstract syntax tree was not translated and why. This is performed for traceability reasons. Such cases occur when the logic environment of the verification sub-chain 120 comprises axioms that would inherently meet the condition expressed in the considered part of the abstract syntax tree. For instance, there is no necessity to transcribe that a set is not empty, as by definition, when using sum type, a sum type is always not empty.

The transcription unit 110 is configured to thirdly convert each abstract syntax tree representative of a proof obligation into a syntax adapted to the proof obligations description input 121. The logic implication relationship operator of the abstract syntax tree is then substituted by the logic implication relationship operator in the syntax adapted to the proof obligations description input 121; and the logic operator "and" of the abstract syntax tree is then substituted by the logic operator "and" in the syntax adapted to the proof obligations description input 121.

The proof obligations resulting from the transcription shall reference the appropriate formulas, and may thus require to be adapted to reference the new names of the formulas, if these names were changed to match the syntax adapted to the proof obligations description input 121.

Furthermore, the transcription unit 110 may need to appropriately insert specific keywords to match the syntax adapted to the proof obligations description input 121. For instance, a specific keyword, e.g. "goal", may be inserted to mark the beginning of a proof obligation.

Furthermore, the transcription unit 110 may need to appropriately rename enumerated set elements as well as variables, in order to match the syntax adapted to the proof obligations description input 121. For instance, some syntax requires that each name of enumerated set element begins with a capital letter, whereas each name of a variable begins with a small letter. The transcription unit 110 may insert a predefined pattern at the beginning of each name of enumerated set element or variable. As shown in the example below, the patterns "E_ and "v_ have been respectively added to the names of enumerated set elements and variables.

A formula in the syntax adapted to the proof obligations description input 121 may need an explicit statement of the types of its formal parameters. This can be easily achieved thanks to the set of identifiers gathered by the transcription unit 110 when traversing the abstract syntax trees.

A proof obligation in the syntax adapted to the proof obligations description input 121 may need an explicit quantification of each variable. This can be easily achieved thanks to the set of identifiers gathered by the transcription unit 110 when traversing the abstract syntax trees.

A transcription, into a proof obligations description format that is suitable to a Why3 platform, of the model example mentioned hereinbefore is shown hereafter:

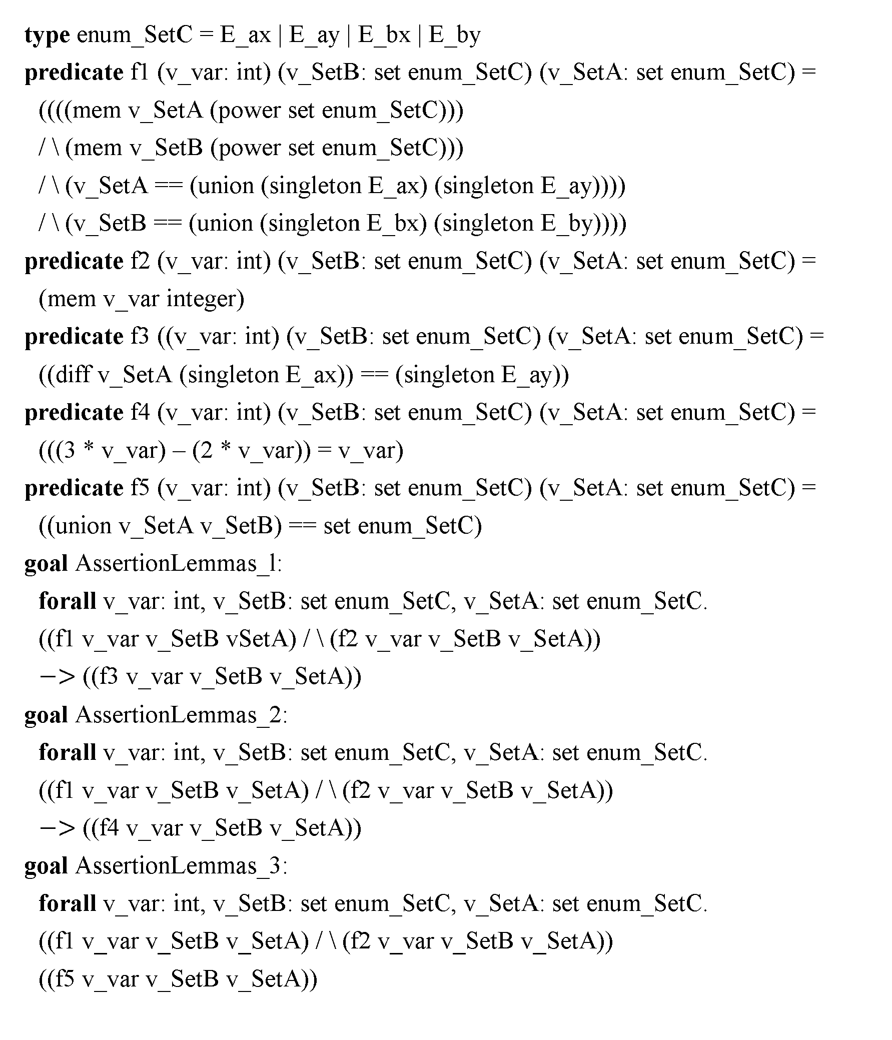

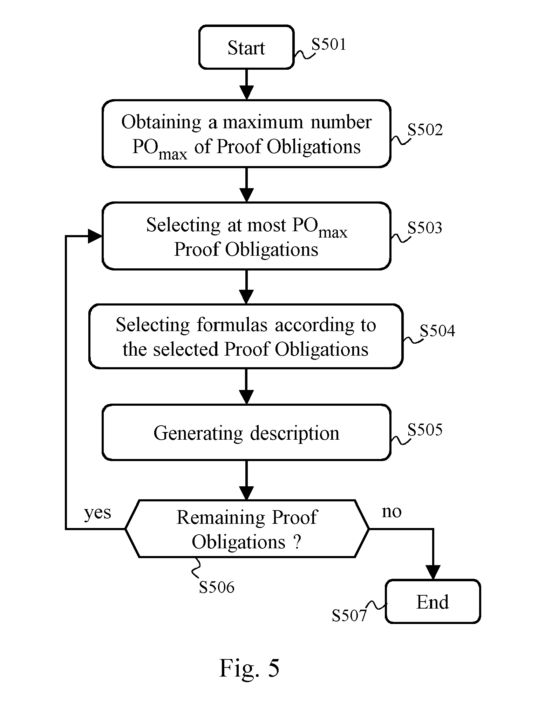

In a particular embodiment, the transcription unit 110 is configured to generate plural proof obligations descriptions adapted to the proof obligations description input 121 from a single proof obligations description obtained from the proof obligations description output 105. The transcription unit 110 is configured to limit the number of proof obligations in each description to a predefined maximum number *POₘₐₓ* of proof obligations. The transcription unit 110 is then configured to select a set *of POₘₐₓ* proof obligations and then fill in the proof obligations description by selecting only formulas and enumerated sets necessary for the definition of the selected proof obligations. The transcription unit 110 is then configured to reiterate the process with another selection of proof obligations, until all proof obligations have been processed. In other words, the proof obligations are spread among the proof obligations descriptions according to a predefined maximum number of proof obligations per proof obligations description. Further details are provided hereafter with regard to Fig. 5.

In a particular embodiment, the verification chain further comprises a control unit 130. The control unit 130 aims at configuring the verification sub-chains 100 and 120, and more particularly the automatic provers. The control unit 130 is configured to set a processing limit, such as a processing timeout, to the automatic provers, within which the automatic provers attempt to prove the proof obligations. The control unit 130 is configured to report the results of the proving process to a user, for instance via a display unit (not shown).

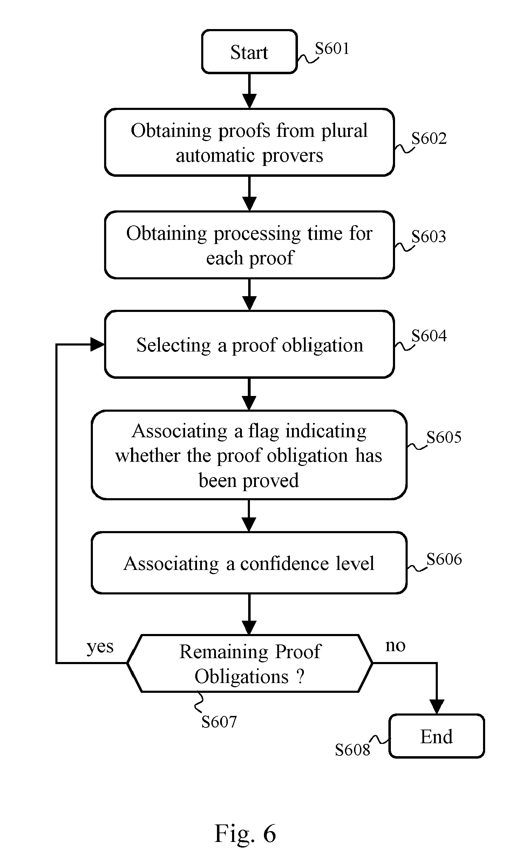

In a particular embodiment, the control unit 130 is configured to associate a confidence level with each proof obligation as a function of whether the proof obligation has been proved by at least one automatic prover. The confidence level may be in addition determined on the basis of at least one identifier of at least one respective automatic prover having proved the proof obligation. Further details are provided hereafter with regard to Fig. 6.

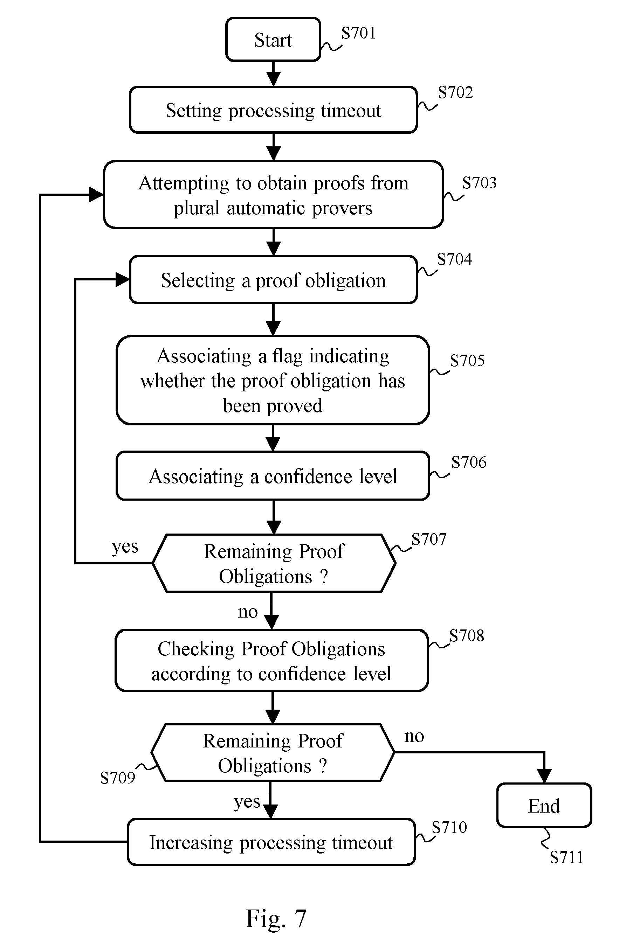

In yet another particular embodiment, the control unit 130 is configured to set a processing limit for the automatic provers to process the proof obligations, to check the proofs obtained with the set processing limit and to set a greater processing limit for said automatic provers to process the proof obligations not proved during the previous iteration(s). Such a processing limit may be a processing timeout, a set of processing resources or a maximum number of proving steps. Further details are provided hereafter with regard to Fig. 7.

It can be noted that the automatic provers may not be capable of stopping the proving process on their own; in this case, the control unit 130 is configured to stop the automatic provers when the considered processing timeout is reached, or when an amount of memory and/or CPU resources is reached.

In yet another particular embodiment, the transcription unit 110 is configured to indicate, for each proof obligation in the description adapted to the proof obligations description input 121, the corresponding start and end of line numbers and column numbers of the corresponding proof obligation in the description obtained from the proof obligations description output 105. It can be noted that a column number corresponds to a position with reference to the start of line. To achieve this, the transcription unit 110 is configured to associate with each abstract syntax tree related to a proof obligation said start and end of line numbers and column numbers. The transcription unit 110 is then configured to insert said start and end of line numbers and column numbers as comments in the description adapted to the proof obligations description input 121, when processing the abstract syntax tree related to the concerned proof obligation. It allows increasing the traceability of the conversion process.

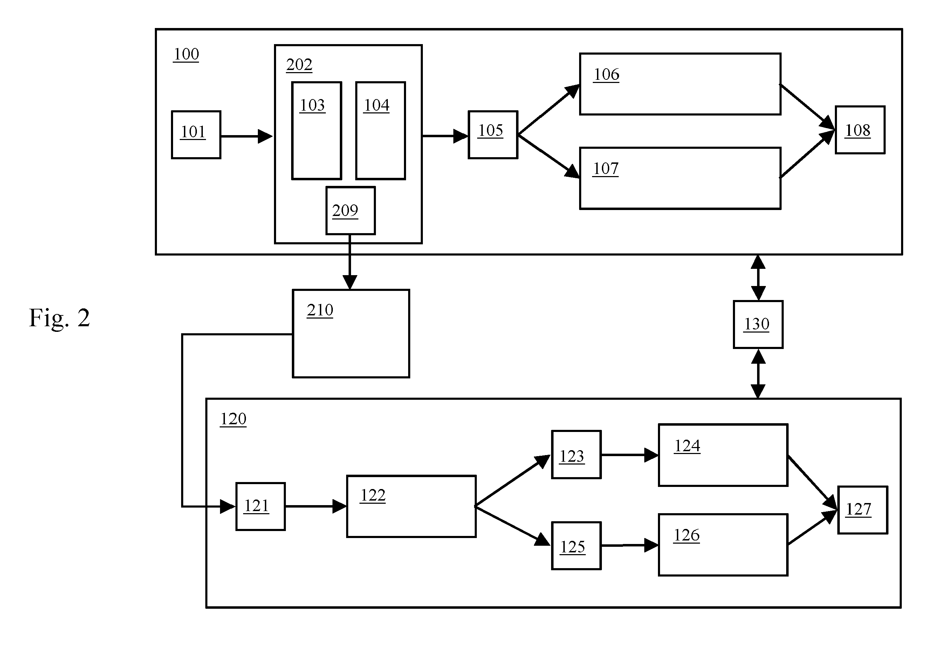

**Fig. 2** schematically represents a second architecture of a verification chain implementing the present invention.

The verification chain shown in Fig. 2 comprises the first verification sub-chain 100 and the second verification sub-chain 120, as already described with regard to Fig. 1.

A change compared to the verification chain shown in Fig. 1 consists in replacing the model analysis unit 102 by a model analysis unit 202. The model analysis unit 202 comprises the first 103 and second 104 sub-units, as well as an abstract syntax trees output 209, in which abstract syntax trees generated by the second sub-unit 104 are stored. The abstract syntax trees output 209 may be a register or a memory zone adapted to receive, or store, the abstract syntax trees. The abstract syntax trees output 209 may be a file, or a pointer to such file, comprising the abstract syntax trees.

Another change compared to the verification chain shown in Fig. 1 consists in replacing the transcription unit 110 by a transcription unit 210. The transcription unit 210 is configured as the transcription unit 110, except that it is connected to the abstract syntax trees output 209, instead of being connected to the proof obligations description output 105. The transcription unit 210 is therefore configured to insert types directly in the abstract syntax trees obtained from the abstract syntax tree output 209.

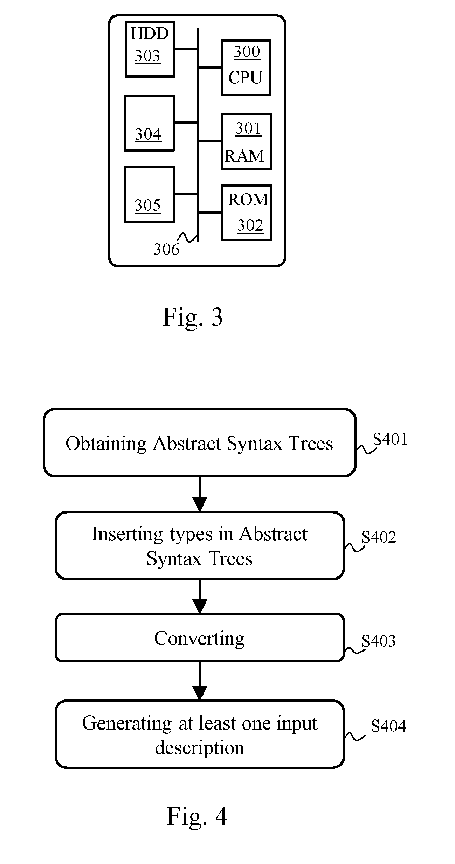

**Fig. 3** schematically represents a hardware platform that may implement the verification chain.

According to the shown architecture, the platform comprises the following components interconnected by a communications bus 306: a processor, microprocessor, microcontroller or CPU (*Central Processing Unit*) 300; a RAM (*Random-Access Memory*) 301; a ROM (*Read-Only Memory*) 302; an HDD (*Hard-Disk Drive*) 303, or any other device adapted to read information stored on storage means; a user interface 304 and a communication interface 305.

The user interface 304 allows interacting with user, in order to allow displaying results of the verification chain, to allow configuring the verification chain and to allow the user to provide inputs to the manual prover of the verification chain.

CPU 300 is capable of executing instructions loaded into RAM 301 from ROM 302, from HDD 303 or from an external storage means (not shown). After the platform has been powered on, CPU 300 is capable of reading instructions from RAM 301 and executing these instructions. The instructions form one computer program that causes CPU 300 to perform some or all of the steps of the algorithms described hereafter with regard to Figs. 4 to 7.

Any and all steps of the algorithms described hereafter with regard to Figs. 4 to 7 may be implemented in software by execution of a set of instructions or program by a programmable computing machine, such as a PC (*Personal Computer*)*,* a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*)*.*

In addition, any and all units of the first and second architectures described hereinbefore with regard to Figs. 1 and 2 may be implemented in software by execution of a set of instructions or program by a programmable computing machine, such as a PC, a DSP or a microcontroller; or else implemented in hardware by a machine or a dedicated component, such as an FPGA or an ASIC.

**Fig. 4** schematically represents an algorithm for performing a transcription from a first proof obligations description to at least one second proof obligations description. The algorithm is performed by a processing device.

In a step 5401, the processing device obtains abstract syntax trees representative of the proof obligations and abstract syntax trees representative of formulas used by the proof obligations. The processing device reads the enumerated sets from the first proof obligations description and stores each element of the read enumerated sets. As already mentioned with regard to Fig. 1, the abstract syntax trees may be derived from a proof obligations description resulting from an analysis of a software program model defined according to the "B Method". Said proof obligations description is in a format compliant with a first automatic prover, namely the automatic prover 106 in Fig. 1. As already mentioned with regard to Fig. 2, the abstract syntax trees may be derived from an analysis of a software program model defined according to the "B Method". An obligation description in a format compliant with the first automatic prover, namely the automatic prover 106 in Fig. 2, is then derived from the abstract syntax trees.

In a following step S402, the processing device inserts types in the abstract syntax trees. As already described with regard to Fig. 1, each node or leaf is then associated with a type. For an operator, the type is at least defined on the basis of the type of the result of the operation performed by the operator. In a particular embodiment, the type of the operator consists in a conjunction of the types of the operands and the type of the result of the application of the operator. For an identifier or a constant value, the corresponding type in the abstract syntax trees is the type of the identifier or constant value.

In a following step S403, the processing device converts the abstract syntax trees with associated types into a description format compliant with at least one second automatic prover. As already described with regard to Fig. 1, the conversion firstly concerns gathering all enumerated sets used in the formulas, then secondly concerns each abstract syntax tree representative of a formula and thirdly concerns each abstract syntax tree representative of a proof obligation.

In a following step S404, the processing device generates at least one description suitable for the at least one second automatic prover. More than one description may be generated, as described hereafter with regard to Fig. 5.

**Fig. 5** schematically represents an algorithm for generating plural second proof obligations descriptions from the first proof obligation description. The algorithm is performed by a processing device.

The algorithm starts in a step S501. In a following step S502, the processing device obtains the already-mentioned maximum number *POₘₐₓ* of proof obligations for the at least one second automatic prover. This maximum number *POₘₐₓ* of proof obligations may be an upper limit of proof obligations that any automatic prover among the at least one second automatic prover is capable to handle. This maximum number *POₘₐₓ* of proof obligations may be empirically defined as being the limit of proof obligations above which at least one automatic prover among the at least one second automatic prover exceeds a predefined processing time threshold. In other words, for a number of proof obligations to be processed greater than *POₘₐₓ,* the time duration necessary to process the proof obligations exceeds said predefined processing time threshold.

In a following step S503, the processing device selects a set of *POₘₐₓ* proof obligations.

In a following step S504, the processing device selects formulas according to the selected proof obligations. In other words, the processing device selects the formulas used in the selected proof obligations.

In a following step S505, the processing device generates a proof obligations description for the selected proof obligations, the description including the selected formulas and being compliant with the at least one second automatic prover. The proof obligations description can then be provided to the at least one second automatic prover.

In a following step S506, the processing device checks whether at least one proof obligation remains to be processed. If at least one proof obligation remains to be processed, the processing device repeats the step S503 and selects a new set of *PO*ₘₐₓ proof obligations, unless less than *POₘₐₓ* proof obligations remain. In this latter case, the set of proof obligations consists in the remaining proof obligations. If no proof obligation remains to be processed, the algorithm ends in a step S507.

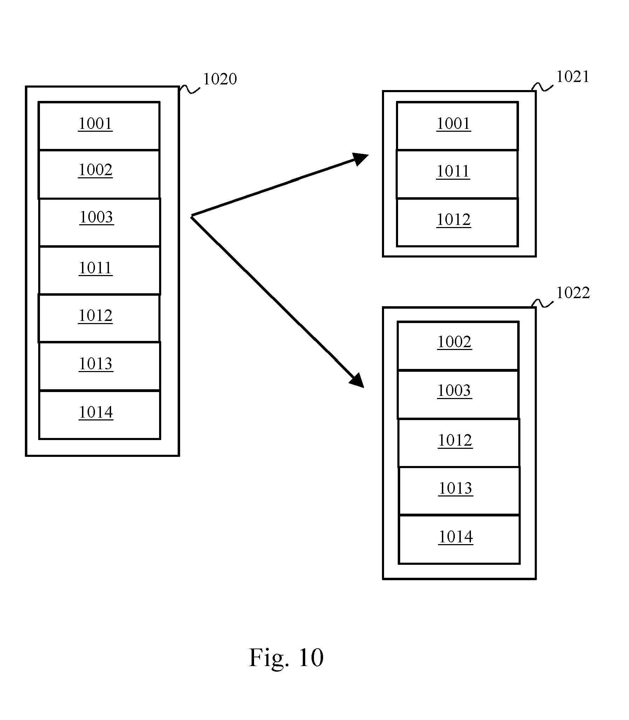

**Fig. 10** schematically represents an example of plural proof obligations descriptions 1021, 1022 generated from a single proof obligations description 1020.

The proof obligations description 1020 comprises three elements representing proof obligations 1001, 1002, 1003. The proof obligations description 1020 further comprises four elements representing formulas, axioms, lemmas or other logic expressions 1011, 1012, 1013, 1014 used in the definition of the proof obligations 1001, 1002, 1003.

The proof obligations descriptions 1021, 1022 are generated from the proof obligations description 1020, by executing the algorithm presented hereinabove with regard to Fig. 4.

Let's consider that *POₘₐₓ* equals 2.

Let's further consider that the proof obligation 1001 is a logic expression based on formulas 1011 and 1012, the proof obligation 1002 is a logic expression based on the formulas 1012 and 1013, and that the proof obligation 1003 is a logic expression based on the formulas 1013 and 1014.

The proof obligations description 1021 comprises one element representative of the proof obligation 1001, as well as two elements respectively representative of the formulas 1011 and 1012.

The proof obligations description 1022 comprises two elements respectively representative of the proof obligations 1002 and 1003, as well as three elements respectively representative of the formulas 1012, 1013 and 1014.

Each proof obligations description 1021, 1022 therefore comprises at most *POₘₐₓ* proof obligations resulting from the proof obligations description 1020, and the proof obligations of the proof obligations description 1020 are spread among the proof obligations descriptions 1021, 1022. In addition, each proof obligations description 1021, 1022 is limited to the proving context of the proof obligations it contains.

**Fig. 6** schematically represents an algorithm for combining results obtained by plural automatic provers. The algorithm is performed by a processing device.

The algorithm starts in a step S601. In a following step S602, the processing device attempts to obtain proofs from plural automatic provers. The proofs are generated by the aforementioned first automatic prover and by the aforementioned at least one second automatic prover.

In a following step S603, the processing device obtains information about processing time duration needed by each automatic prover to generate each proof.

In a following step S604, the processing device selects a proof obligation.

In a following step S605, the processing device associates with the selected proof obligation a flag indicating whether the proof obligation has been proved. In other words, the flag indicates whether at least one automatic prover generated a proof for the selected proof obligation. The processing device may further associate with the selected proof obligation an identifier of each automatic prover having generated a proof for the selected proof obligation.

In a following step S606, the processing device associates with each proof obligation a confidence level. The confidence level is determined as a function of whether the proof obligation has been proved by at least one automatic prover. In a particular embodiment, the confidence level is representative of the number of automatic provers having proved the proof obligation. In another particular embodiment, the confidence level is further determined on the basis of an identifier of at least one automatic prover having proved the proof obligation. For instance, the confidence level may be representative of the fact that certified automatic provers may be more reliable than others.

The processing device may display to a user, for each proof obligation, information indicating whether the proof obligation has been proved or not, information indicating the set of automatic provers, if any, having proved the proof obligation, and the time duration needed by each concerned automatic prover to prove the proof obligation. The processing device may display to a user, for each proof obligation, the confidence level associated with the proof obligation.

In a following step S607, the processing device checks whether at least one proof obligation remains to be processed. If at least one proof obligation remains to be processed, the processing device repeats the step S604 and selects another proof obligation. Otherwise, the algorithm ends in a step S608.

**Fig. 7** schematically represents an algorithm for configuring plural automatic provers. The algorithm is performed by a processing device.

Fig. 7 is more particularly detailed when considering configuring the automatic provers with a processing limit corresponding to a processing timeout. It shall be understood that the same principles apply when the processing limit is a maximum number of proving steps that the automatic provers are allowed to perform, or when the processing limit is defined as a set of resources such as memory resources and/or CPU resources.

The algorithm starts in a step S701. In a following step S702, the processing device sets a processing timeout for plural automatic provers. The processing timeout is for instance set to a predefined value. Said plural automatic provers are the aforementioned first automatic prover and the aforementioned at least one second automatic prover.

In a following step S703, the processing device attempts to obtain proofs from said plural automatic provers within the aforementioned processing timeout.

In a following step S704, the processing device selects a proof obligation.

In a following step S705, the processing device associates with the selected proof obligation a flag indicating whether the proof obligation has been proved. In other words, the flag indicates whether at least one automatic prover generated a proof for the selected proof obligation.

In a following step S706, the processing device associates with each proof obligation a confidence level. The confidence level has already been detailed hereinbefore with regard to Fig. 6.

In a following step S707, the processing device checks whether at least one proof obligation remains to be processed. If at least one proof obligation remains to be processed, the processing device repeats the step S704 and selects another proof obligation. Otherwise, the processing device performs a step S708.

In the step 708, the processing device checks the proof obligations according to their confidence level. The processing device compares the confidence level of the proof obligations with a predefined threshold. The processing device classifies the proof obligations according to whether their respective confidence level is lower or whether their respective confidence level is greater than or equal to the predefined threshold.

In a following step S709, the processing device checks whether it remains proof obligations that have not been proved or proof obligations for which their respective confidence level is lower than the predefined threshold. When such proof obligations remains, the processing device performs a step S710. Otherwise, the algorithm ends in a step S711. The algorithm also ends in the step S711, when a predefined global processing timeout is reached, in order to avoid indefinitely running the algorithm.

In the step S710, the processing device increases the processing timeout for automatic provers for which proof obligations remain to be proved, and for which the confidence level is still below the predefined threshold. The processing device then reconfigures the automatic provers accordingly. Accordingly, the automatic prover for which a first attempt to prove proof obligations has another chance to prove these proof obligations with a longer processing timeout. Other automatic provers can switch to other proof obligations to be proved. The processing timeout for these automatic provers can then be reset. Then, the processing device repeats the step S703.

This approach allows excluding from the proving process proof obligations that can be proved quickly by automatic provers, using a short processing timeout. The global proving time is then reduced.

In another embodiment, the processing device doesn't determine a confidence level for each proof obligation. Instead, the processing device reiterates the proving process for proof obligations that were not yet proved.

In yet another embodiment, the processing device reiterates the proving process for proof obligations that were not yet proved and for proof obligations that were proved by less than a predefined number of automatic provers. For instance, the processing device reiterates the proving process for proof obligations that were not yet proved and for proof obligations that were proved by only one automatic prover.

## Claims

1. A method performed by a device for automatically proving the correctness of a software or firmware program model, said software or firmware program model involving a set of proof obligations to be proved by a first automatic prover and at least one second automatic prover, each proof obligation being described in a format compliant with the first automatic prover, **characterized in that** it comprises:
- obtaining, for each proof obligation to be proved, an abstract syntax tree representing said obligation to be proved, each abstract syntax tree comprising interconnected nodes and leaves representing each operator and operand of said obligation to be proved;
- associating a type with each node and leaf in the obtained abstract syntax trees, a type for an operator being at least defined on the basis of the type of the result of the operation performed by the operator; and
- converting the abstract syntax trees with associated types into at least one proof obligations description matching a format compliant with the at least one second automatic prover, each node or leaf of the abstract syntax trees being converted in a corresponding symbol in said format compliant with the at least one second automatic prover taking into account the type associated with said node or leaf.

2. The method according to claim 1, **characterized in that**, each proof obligation being defined by a logic relationship between formulas, it comprises obtaining, for each formula used in defining the proof obligations to be proved, an abstract syntax tree representing said formula, each abstract syntax tree comprising interconnected nodes and leaves representing each operator and operand of said formula.

3. The method according to any one of claims 1 and 2, **characterized in that** the type for an operator is a conjunction of the types of the operands and the type of the result of the operation performed by the operator.

4. The method according to any one of claims 1 to 3, **characterized in that** each abstract syntax tree is obtained by parsing and lexically analysing a description of the proof obligations in the format compliant with the first automatic prover.

5. The method according to any one of claims 1 to 4, **characterized in that** converting the abstract syntax trees comprises:
- searching for abstract syntax tree fragments matching a predefined transcription rule;
- converting the operator of a found abstract syntax tree fragment matching the predefined transcription rule; and
- searching for another abstract syntax tree fragment matching a predefined transcription rule in a sub-tree of the found abstract syntax tree fragment.

6. The method according to any one of claims 1 to 5, **characterized in that** the abstract syntax trees are converted into plural proof obligation descriptions, **in that** the proof obligations are spread among the proof obligations descriptions according to a predefined maximum number of proof obligations per proof obligations description.

7. The method according to any one of claims 1 to 6, **characterized in that** it comprises:
- attempting to obtain proofs for each proof obligation with the first automatic prover and the at least one second automatic prover; and
- determining for each proof obligation a confidence level, on the basis of a number of automatic provers with which the proof obligation has been proved.

8. The method according to claim 7, **characterized in that** the confidence level is further determined on the basis of at least one identifier of an automatic prover with which the proof obligation has been proved.

9. The method according to any one of claims 1 to 8, **characterized in that** it comprises:
- attempting to obtain proofs for each proof obligation with the first automatic prover and the at least one second automatic prover within a first processing limit; and
- attempting to obtain proofs with at least one automatic prover among the first automatic prover and the at least one second automatic prover within a second processing limit greater than the first processing limit, for each proof obligation that has not been proved within the first processing limit.

10. The method according to claim 9, **characterized in that** it further comprises attempting to obtain proofs with at least one automatic prover, among the first automatic prover and the at least one second automatic prover, within the second processing limit, for each proof obligation that has not been proved within the first processing limit by a predefined number of automatic provers.

11. The method according to any one of claims 9 and 10, **characterized in that** said first and second processing limits are processing timeouts.

12. A computer program **characterized in that** it comprises program code instructions which can be loaded in a programmable device for implementing the method according to any one of claims 1 to 11, when the program code instructions are run by the programmable device.

13. Information storage means, **characterized in that** they store a computer program comprising program code instructions which can be loaded in a programmable device for implementing the method according to any one of claims 1 to 11, when the program code instructions are run by the programmable device.

14. A device for automatically proving the correctness of a software or firmware program model, said software or firmware program model involving a set of proof obligations to be proved by a first automatic prover and at least one second automatic prover, each proof obligation being described in a format compliant with the first automatic prover, **characterized in that** it comprises:
- means for obtaining, for each proof obligation to be proved, an abstract syntax tree representing said obligation to be proved, each abstract syntax tree comprising interconnected nodes and leaves representing each operator and operand of said obligation to be proved;
- means for associating a type with each node and leaf in the obtained abstract syntax trees, a type for an operator being at least defined on the basis of the type of the result of the operation performed by the operator; and
- means for converting the abstract syntax trees with associated types into at least one proof obligations description matching a format compliant with the at least one second automatic prover, each node or leaf of the abstract syntax trees being converted in a corresponding symbol in said format compliant with the at least one second automatic prover taking into account the type associated with said node or leaf.
